# FASCICULE DE BREVET EUROPEEN

(11) **EP 1 322 485 B1**
(45) Date de publication et mention de la délivrance du brevet: **09.04.2008**
(21) Numéro de dépôt: 01962803.1
(22) Date de dépôt: 29.06.2001
(51) Int. Cl.: B60C 17/06, B60C 17/04, B29C 70/22, B29C 70/54, B29C 70/32, B29C 45/14

(54) **APPUI DE SOUTIEN DE BANDE DE ROULEMENT**
UNTERSTÜTZUNGSVORRICHTUNG FÜR EINE LAUFFLÄCHE
RUNNING TREAD SAFETY SUPPORT

(30) Priorité: 21.09.2000 FR 0012067
(43) Date de publication de la demande: 02.07.2003
(73) Titulaire: Société de Technologie Michelin, 63000 Clermont-Ferrand Cedex 09 (FR); Michelin Recherche et Technique S.A., 1763 Granges-Paccot (CH)
(72) Inventeur: Bernadot, Patrick, F-63540 Romagnat (FR); DRAP, Sébastien, F-63111 Dallet (FR); COGNE, Michael, F-63000 Clermont-Ferrand (FR)
(74) Mandataire: Diernaz, Christian
(86) Numéro de dépôt international: PCT/EP2001/007484
(87) Numéro de publication internationale: WO 2002/024476

(56) Documents cités:
- EP-A- 0 020 150
- EP-A- 0 721 854
- EP-A- 1 000 774
- WO-A-99/22953
- US-A- 4 281 700
- US-A- 6 076 578

## Description

La présente invention se rapporte à la fabrication d'appuis de soutien de bande de roulement utilisés à l'intérieur de pneumatiques pour supporter la charge en cas de perte de pression de gonflage. Plus précisément, elle concerne des appuis comportant à leur base une armature de renforcement sensiblement inextensible réalisée au moyen d'éléments de renforcement du genre de ceux pouvant renforcer les pneumatiques. Elle concerne aussi les modes de fabrication de tels appuis.

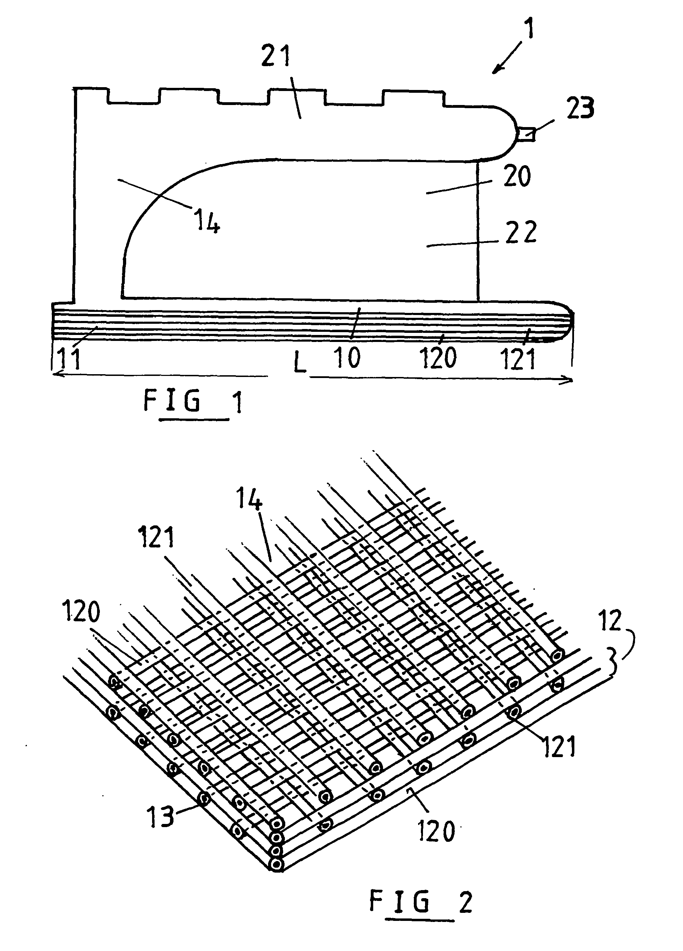

La demande de brevet EP 0 796 747 décrit un exemple particulier d'un tel appui, en matière souple, par exemple à base d'élastomères à chaînes saturées tel que le caoutchouc EPDM. Sur la figure 1 de la dite demande et sur le passage correspondant de la description, on voit et on lit que la base de l'appui de soutien est renforcée par des éléments disposés sensiblement circonférentiellement.

On connaît différentes techniques de fabrication d'un objet moulé : le moulage par compression et le moulage par transfert de matière et dans cette catégorie on peut classer le moulage par injection ainsi que le moulage par coulée. Le moulage par compression suppose l'introduction du volume de caoutchouc nécessaire à l'intérieur du moule avant de le fermer, alors que les moulages par injection ou par coulée supposent la fermeture du moule avant l'introduction du volume de caoutchouc ou de produits nécessaires. Le moulage par injection consiste à injecter dans le moule fermé le matériau constituant le produit fini sous des conditions de pression et de températures données ; quant au moulage par coulée, il diffère de l'injection par le fait que l'on introduit dans des conditions opératoires précises les produits de base dans le moule de coulée, les dits produits de base réagissant entre eux dans ledit moule pour donner le matériau du produit fini.

Les différentes techniques impliquant l'introduction de matière dans un moule fermé se prêtent mal aux produits finis non homogènes et en particulier les produits renforcés par des éléments de renforcement flexibles. Les dites techniques sont mal adaptées lorsque les renforts sont des nappes de fils ou câbles séparés entre eux : le caoutchouc refoulé dans le moule entraîne avec lui les éléments de renforcement ou du moins déforme et/ou déplace très fortement les dits éléments, d'où l'impossibilité pratique d'assurer un positionnement précis des dits éléments dans le produit fini et en conséquence d'obtenir des propriétés correctes, uniformes et répétitives de renforcement. C'est une des raisons premières pour laquelle la technique de refoulement de matière dans un moule fermé, pour les pièces en caoutchouc renforcées par des fils ou câbles, ne s'est jamais montrée avantageuse et propice à obtenir des produits de haut de gamme. Il est par exemple bien connu que les pneumatiques usuels, malgré de nombreuses tentatives, ne sont pas actuellement injectés ou obtenus par coulée : on réalise d'abord une ébauche non vulcanisée ou crue à une forme assez proche de la forme finale de fabrication, l'ébauche comportant les éléments de renforcement insérés aux endroits désirés entre les différentes couches de matériau élastomérique et on assure ensuite le moulage en renfermant autour de l'ébauche les éléments moulants du moule de vulcanisation.

Pour résoudre les dits problèmes de positionnement des éléments de renforcement lors de la fabrication d'un appui par une technique de refoulement de matière, la demande EP-A-1 000 774, correspondant au préambule de la revendication 1, propose d'associer à des éléments de renfort de la base dudit appui, éléments circonférentiels sensiblement inextensibles et utilisés sous forme de nappe calandrée en matériau caoutchouteux, des éléments de renfort complémentaires disposés, au moins en partie, radialement à l'extérieur des éléments de renfort circonférentiels et axialement en regard des points d'alimentation disposés au niveau du corps de l'appui. De préférence, les dits éléments de renfort complémentaires comprennent des éléments orientés par rapport à la direction circonférentielle d'un angle supérieur à 60° et se présentent aussi sous forme de nappe calandrée en matériau caoutchouteux.

La solution décrite ci-dessus, malgré les progrès réalisés dans la précision nécessaire au bon fonctionnement et à l'endurance de l'appui de soutien, n'est pas optimale tant du point de vue allègement et prix de revient industriel qu'endurance dudit appui. L'invention propose une autre solution, fondée sur le choix de matériaux plus propices à conférer audit appui les propriétés recherchées. Ladite solution associe l'emploi, à titre d'armature de renforcement de la base de l'appui considéré, d'une grille formée d'éléments de renforcement croisés entre eux, en combinaison avec l'utilisation, à titre de matériau constitutif de l'appui, d'un polymère dont le module est supérieur à 30 MPa.

Le module dudit polymère est un module sécant d'extension sous un allongement relatif de 10% ; ledit module est mesuré selon la norme ASTM 638 à 80°C.

Le polymère utilisé peut être un plastomère ou un élastomère. De manière avantageuse est utilisé un élastomère dont l'allongement à la rupture est supérieur à 200% pour des températures comprises entre -30° et +80°C. Les propriétés citées peuvent être obtenues, à titre d'exemples par la famille des élastomères thermoplastiques ou encore par les élastomères polyuréthanes.

Un élastomère thermoplastique est un polymère élastomérique linéaire ayant des températures de mise en oeuvre inférieures à 400°C et dont les propriétés rhéologiques permettent d'envisager des méthodes de transformation telles que l'injection ou l'extrusion. Il est dans tous les cas d'une structure comportant deux phases non compatibles, l'une rassemblant les séquences thermoplastiques de la chaîne qui sont ainsi dispersées dans la phase élastomère. Sans que l'énumération qui suit soit considérée comme limitative, il faut citer :
a) les copolymères séquencés styrène-butadiène, styrène-isoprène,
b) les élastomères thermoplastiques dérivés des polyoléfines, mélanges physiques d'homopolymère ou de copolymère de propylène avec un élastomère non vulcanisé de type EPM ou EPDM (caoutchouc d'éthylène ou de propylène),
c) les polyethers -esters bloc amides, enchaînement linéaire et régulier de segments polyamides rigides et de segments polyethers ou polyesters souples,
d) les élastomères de polyesters.
Les élastomères polyuréthanes proviennent de la réaction d'un diisocyanate aromatique ou aliphatique sur un polyol (polyethers ou polyester et peuvent se classer en trois grandes familles : les coulables, les thermoplastiques, les malaxables, les deux premières familles intéressant plus particulièrement l'invention.

Il faut entendre par grille une armature de renforcement composée d'au moins une couche d'au moins deux nappes d'éléments de renforcement, parallèles entre eux dans chaque nappe et croisés d'une nappe à la suivante en faisant avec la direction circonférentielle des angles α et β. De manière préférentielle, les dits angles sont respectivement nul ou quasiment nul et égal à ou sensiblement égal à 90°, les dits éléments étant d'une part enrobés d'une substance permettant d'obtenir une liaison réelle aux points de croisement entre éléments et d'autre part séparés entre eux dans chaque nappe d'une distance ou pas, mesuré perpendiculairement à leur direction commune, supérieure à 5 mm, de manière à ce que soient présents des vides entre éléments dans la grille en tant que telle.

Les éléments de renforcement de la grille sont préférentiellement des éléments en fibre de verre, matériau qui allie la robustesse à la légèreté: La substance d'enrobage des éléments de renfort des nappes de grille est préférentiellement une résine. Les dites caractéristiques permettent une bonne cohésion de la grille avec la matière polymérique qui sera injectée ou coulée dans le moule de fabrication de l'appui. Parmi les résines d'enrobage, on peut citer les polyoléfines comme par exemple le polypropylène (PP), les polychlorures de vinyle (PVC), les copolymères styréniques comme par exemple le styrène-butadiène. On utilisera de préférence des matériaux thermodurs comme les résines epoxy et polyester insaturés.

On entend par élément de renforcement aussi bien un monofilament qu'un assemblage de filaments élémentaires, de natures identiques ou distinctes, comme torons et/ou câbles.

La grille, conforme à l'invention, peut être obtenue de plusieurs manières. Le premier mode de réalisation consiste à fabriquer sur un tambour de confection un anneau cylindrique formé des deux nappes d'éléments de renforcement nus, puis trempage dudit anneau dans un bain de résine choisie, par exemple thermodurcissable. On entend par résine thermodurcissable un polymère dont la température de transition liquide est supérieure à 400°C, et les résines envisageables peuvent être préférentiellement les résines epoxy. La résine utilisée, par durcissement à l'air libre, assure la jonction entre les éléments croisés des nappes d'éléments de renforcement. Plusieurs anneaux peuvent alors être disposés concentriquement les uns sur les autres et ainsi former la grille de renforcement d'appui.

La deuxième méthode consiste à fabriquer l'anneau d'au moins deux nappes à partir d'éléments préenrobés de la résine choisie et comme précédemment à constituer l'anneau sur un tambour. Ledit anneau est alors imprégné d'un liant thermofusible, et enroulé plusieurs fois pour former la grille, les différents enroulements étant liés entre eux par fusion du liant et sa solidification ultérieure. Les liants dont l'utilisation est préférentielle sont des acétates de vinyle ou des copolymères éthylène-acétate de vinyle (EVA), mais peuvent être aussi des polyacryliques (PMMA) ou des polyoléfines comme par exemple le polyéthylène.

La liaison entre enroulements peut être nécessaire seulement en début d'enroulement, lors du recouvrement du bord de départ d'enroulement ou en fin d'enroulement lors du chevauchement de l'anneau par le bord d'arrivée d'enroulement : le liant nécessaire entre les couches ou anneaux est alors réalisé au moyen d'une colle appropriée. Les colles possibles sont des polyuréthanes et préférentiellement des cyanoacriliques. La colle Cyanolite est un des meilleurs exemples.

L'utilisation d'une grille telle que décrite ci-dessus confère à l'armature de renforcement de la base de l'appui un positionnement pratiquement parfait, mais aussi a pour but d'augmenter la résistance de la grille vis à vis des contraintes imposées dues soit à la méthode de fabrication soit au fonctionnement de l'appui lors du roulage de l'ensemble monté. Ladite résistance est d'autant meilleure que la matière constitutive de l'appui de soutien est capable d'entourer la grille de façon homogène, une telle possibilité étant procurée par le procédé de fabrication dudit appui. Un tel procédé, conforme à l'invention, consiste à poser la grille décrite ci-dessus, préalablement fabriquée et de largeur axiale adaptée à la largeur de la base d'appui, sur le noyau d'un moule de coulée ou d'injection, doté sur sa périphérie de plots de positionnement de grille, à fermer le moule et à transférer à l'intérieur dudit moule la matière polymérique choisie ou les ingrédients nécessaires à la constitution de ladite matière.

L'invention sera mieux comprise à l'aide du dessin annexé à la description, illustrant un exemple non limitatif d'exécution d'un pneumatique conforme à l'invention, et qui, associés à une jante adaptée, forme un ensemble pneumatique-jante performant. Sur ledit dessin, la figure 1 représente schématiquement un appui de soutien de bande de roulement conforme à l'invention, la figure 2 représente, vue en perspective, une grille composée de plusieurs anneaux.

Sur la figure lest représenté en coupe transversale un appui de soutien de bande de roulement conforme à l'invention. Ledit appui 1 comprend une base 10 et un corps 20 de formes généralement annulaires. Le corps 20 comprend un sommet 21 ainsi qu'une série d'évidements 22 qui s 'étendent axialement dans la partie centrale du corps et débouchent d'un seul côté. Les dits évidements sont régulièrement répartis sur toute la circonférence du corps 20. Le sommet du corps comporte aussi des protubérances 23 qui sont dues à la réalisation de l'appui par transfert de matière dans un moule fermé préalablement à l'introduction de la matière. Les dites protubérances indiquent la présence des points d'alimentation de la matière, et sont régulièrement réparties sur la circonférence du sommet 21.

La base 10 est renforcée par une grille 11 formée de deux enroulements d'un anneau 12 composé de deux nappes 120 et 121 de câbles de fibre de verre, la nappe radialement intérieure 120 ayant des câbles orientés circonférentiellement et la nappe radialement supérieure 121 ayant des câbles orientés axialement. Les câbles sont enrobés d'une résine thermodurcissable 13 et en l'occurrence d'une résine epoxy et l'assemblage des deux nappes 120 et 121 aux points de croisement des câbles des deux nappes est réalisé, avant enroulage sur le tambour de confection de ladite grille 11, par durcissement de la résine epoxy à température ambiante sous l'action de rayons ultraviolet. La distance e entre deux câbles enrobés, mesurée perpendiculairement à la direction commune des câbles d'une même nappe 120 (ou 121) et dans le plan de ladite nappe, est égale à 10 mm, qui est un pas entre câbles permettant la circulation aisée de la matière injectée ou coulée 14 entre câbles dans le moule de transfert. Des deux côtés dudit anneau 12 est pulvérisé un liant thermofusible, en l'occurrence un acétate de vinyle. Ledit liant, après enroulement sur un tambour de confection de l'anneau sur deux tours, est fondu par apport de calories au moyen d'un courant d'air chaud obtenu par un moyen adapté tel qu'un séchoir industriel, ce qui permet ensuite, après un tour d'enroulement et par refroidissement, la jonction des éléments de renforcement de la nappe intérieure 120 de l'anneau 11 aux éléments de renforcement de la nappe extérieure 121 qui est alors enroulée sur la nappe 120. Le bord circonférentiel de l'anneau 120 qui constitue le début d'enroulement est, sur une longueur circonférentielle 1, sensiblement égale à 1% de la circonférence intérieure de l'enroulement, collé à la face intérieure du deuxième enroulement au moyen d'une colle telle que la cyanolite que l'on dépose sur les éléments de renforcement de l'anneau 12. Il en est de même de la fin d'enroulement, qui sera collé sur la partie d'anneau qui lui est intérieure, de sorte qu'il y ait chevauchement entre le début et la fin d'enroulement.

La grille 11 ainsi obtenue, de largeur L au moins égale à la largeur 1 de la base 10 de l'appui diminuée de 10 mm, et dans le cas décrit égale à ladite largeur 1, est posée sur le noyau cylindrique du moule d'injection ou de coulée de l'appui, ledit noyau étant doté sur sa périphérie et plus particulièrement dans sa région centrale de plots ou clavettes dites de positionnement de la grille 11. Les dits plots servant de support espaceur pour la grille 11 ont une hauteur telle que la dite grille est, dans le produit fini qu'est l'appui de soutien 1, située radialement sensiblement au milieu de la base 10 de l'appui. L'espace ainsi créé entre la face extérieure du noyau et la face intérieure de la grille 11 de renforcement, correspondant à la hauteur des plots, comprise entres 0,5 et 2 mm selon les dimensions d'appui, est rempli de manière homogène par la matière de remplissage du moule, ce qui conduit à une amélioration de l'ancrage mécanique de la grille dans la matière de l'appui 1, mais aussi et plus particulièrement à l'augmentation de la résistance de la grille 11 de la base 10 de l'appui 1 au flambement ou flambage lors du retrait circonférentiel de l'appui 1 sorti du moule.

Dans le cas de largeur de grille inférieure à la largeur 1 de la base de l'appui, il est aussi possible, avant injection ou coulée de la matière polymérique, d'assurer le maintien de la grille au moyen de l'expansibilité du noyau du moule d'injection ; la grille est alors mise sous tension suffisante pour se maintenir pendant l'injection ou coulée.

## Revendications

1. - Appui de soutien (1) de bande de roulement, ledit appui (1) ayant une base (10) comportant une armature de renforcement (11) d'au moins deux nappes d'éléments (120, 121) de renfort, **caractérisé en ce que** ladite armature est constituée d'une grille (11) formée d'éléments de renforcement parallèles entre eux dans chaque nappe et croisés d'une nappe à la suivante en combinaison avec l'utilisation à titre de matériau constitutif (14) de l'appui (1) d'un polymère dont le module est supérieur à 30 MPa.

2. - Appui selon la revendication 1, **caractérisé en ce que** les éléments de renforcement font respectivement avec la direction circonférentielle des angles sensiblement égaux à 0°et 90°.

3. - Appui selon la revendication 2 **caractérisé en ce que** le matériau constitutif (14) dudit appui (1) est constitué d'un élastomère.

4. - Appui selon la revendication 3 **caractérisé en ce que** l'élastomère du matériau constitutif (14) dudit appui (1) a un allongement à la rupture supérieur à 200%.

5. - Appui selon la revendication 3 **caractérisé en ce que** le matériau constitutif (14) dudit appui (1) est constitué d'un élastomère thermoplastique.

6. - Appui selon la revendication 3 **caractérisé en ce que** le matériau constitutif (14) dudit appui (1) est constitué d'un polyuréthane élastomérique.

7. - Appui selon l'une des revendications 1 à 6 **caractérisé en ce que** les éléments de renforcement dudit appui (1) sont des éléments en fibre de verre.

8. - Appui selon l'une des revendications 1 à 7 **caractérisé en ce que** les dits éléments de renforcement sont enrobés d'une résine (13) permettant d'obtenir une liaison réelle aux points de croisement entre éléments, et sont séparés entre eux dans chaque nappe d'un pas ou distance entre éléments, mesuré perpendiculairement à leur direction commune, supérieur à 5 mm.

9. - Procédé de fabrication de l'appui selon la revendication 1, **caractérisé en ce qu'**il consiste à poser la grille (11), décrite ci-dessus, préalablement fabriquée et de largeur axiale L au moins égale à la largeur de la base (10) d'appui 1 diminuée de 10 mm, sur le noyau d'un moule de coulée ou d'injection, doté sur sa périphérie de plots de positionnement de grille, à fermer le moule et à transférer à l'intérieur dudit moule la matière polymérique choisie (14) ou les ingrédients nécessaires à la constitution de ladite matière.

## Claims

1. Tread bearing support (1), the said support (1) having a base (10) including a reinforcement armature (11) of at least two plies of reinforcement elements (120, 121), **characterised in that** the said armature consists of a grille (11) formed by reinforcement elements parallel to each other in each ply and crossed from one ply to the next in combination with the use, as a material (14) making up the support (1), of a polymer whose modulus is greater than 30 MPa.

2. Support according to Claim 1, **characterised in that** the reinforcement elements form respectively with the circumferential direction angles substantially equal to 0° and 90°.

3. Support according to Claim 2, **characterised in that** the material (14) making up the said support (1) consists of an elastomer.

4. Support according to Claim 3, **characterised in that** the elastomer of the material (14) making up the said support (1) has an elongation at break greater than 200%.

5. Support according to Claim 3, **characterised in that** the material (14) making up the said support (1) consists of a thermoplastic elastomer.

6. Support according to Claim 3, **characterised in that** the material (14) making up the said support (1) consists of an elastomeric polyurethane.

7. Support according to one of Claims 1 to 6, **characterised in that** the reinforcement elements of the said support (1) are glass fibre elements.

8. Support according to one of Claims 1 to 7, **characterised in that** the said reinforcement elements are coated with a resin (13) for obtaining a real connection at the points of intersection between elements, and are separated from each other in each ply by a pitch or distance between elements, measured perpendicularly to their common direction, greater than 5 mm.

9. Method of manufacturing the support according to Claim 1, **characterised in that** it consists of placing the grille (11) described above, previously manufactured and with an axial length L at least equal to the width of the support base (10) 1 minus 10 mm, on the core of a casting or injection mould, provided at its periphery with grille positioning studs, closing the mould and transferring within the said mould the chosen polymeric material (14) or the ingredients necessary for forming the said material.

## Patentansprüche

1. Unterstützungsvorrichtung (1) für eine Lauffläche, wobei die Unterstützung (1) eine Basis (10) mit einer Verstärkungsbewehrung (11) aus wenigstens zwei Kordlagen mit Verstärkungselementen (120, 121) besitzt, **dadurch gekennzeichnet, dass** die Bewehrung aus einem Gitter (11) gebildet ist, das aus Verstärkungselementen, die in jeder Kordlage parallel zueinander und von einer Kordlage zur anderen überkreuz angeordnet sind, in Kombination mit der Verwendung eines Polymers, dessen Modul größer als 30 MPa ist, als Grundmaterial (14) der Unterstützung (1) gebildet ist.

2. Unterstützung nach Anspruch 1, **dadurch gekennzeichnet, dass** die Verstärkungselemente mit der Umfangsrichtung Winkel bilden, die im Wesentlichen 0° bzw. 90° betragen.

3. Unterstützung nach Anspruch 2, **dadurch gekennzeichnet, dass** das Grundmaterial (14) der Unterstützung (1) aus einem Elastomer gebildet ist.

4. Unterstützung nach Anspruch 3, **dadurch gekennzeichnet, dass** das Elastomer des Grundmaterials (14) der Unterstützung (1) eine Reißdehnung besitzt, die größer als 200 % ist.

5. Unterstützung nach Anspruch 3, **dadurch gekennzeichnet, dass** das Grundmaterial (14) der Unterstützung (1) aus einem thermoplastischen Elastomer gebildet ist.

6. Unterstützung nach Anspruch 3, **dadurch gekennzeichnet, dass** das Grundmaterial (14) der Unterstützung (1) aus einem elastomeren Polyurethan gebildet ist

7. Unterstützung nach einem der Ansprüche 1 bis 6, **dadurch gekennzeichnet, dass** die Verstärkungselemente der Unterstützung (1) Elemente aus Glasfaser sind.

8. Unterstützung nach einem der Ansprüche 1 bis 7, **dadurch gekennzeichnet, dass** die Verstärkungselemente mit einem Harz (13), das das Erhalten einer wirksamen Bindung mit den Kreuzungspunkten zwischen Elementen ermöglicht, umhüllt sind und in jeder Kordlage um eine Schrittweite oder einen Abstand voneinander getrennt sind, der, senkrecht zu ihrer gemeinsamen Richtung gemessen, größer als 5 mm ist.

9. Verfahren zur Herstellung der Unterstützung nach Anspruch 1, **dadurch gekennzeichnet, dass** es darin besteht, das oben beschriebene im Voraus gefertigte Gitter (11), das eine axiale Weite L besitzt, die wenigstens gleich der um 10 mm verminderten Weite 1 der Basis (10) der Unterstützung ist, auf den Kern einer Druckguss- oder Spritzform, der an seinem Umfang mit Höckern für die Positionierung eines Gitters versehen ist, aufzulegen, die Form zu schließen und das gewählte polymere Material (14) oder die zur Bildung des Materials notwendigen Bestandteile in die Form zu übertragen.
